Europäisches Patentamt

European Patent Office

Office européen des brevets

(19)

(11) Veröffentlichungsnummer: **0 290 470**
**B1**

(12) **EUROPÄISCHE PATENTSCHRIFT**

(45) Veröffentlichungstag der Patentschrift: **08.08.90**

(21) Anmeldenummer: **87901380.3**

(22) Anmeldetag: **05.03.87**

(86) Internationale Anmeldenummer:
**PCT/DE87/00096**

(87) Internationale Veröffentlichungsnummer:
**WO 87/05998 08.10.87 Gazette 87/22**

(51) Int. Cl.⁵: **G 01 L 9/04,** G 01 L 9/06,
G 01 L 9/08

(54) DRUCKSENSOR.

(30) Priorität: **27.03.86 DE 3610350**

(43) Veröffentlichungstag der Anmeldung:
**17.11.88 Patentblatt 88/46**

(45) Bekanntmachung des Hinweises auf die
Patenterteilung:
**08.08.90 Patentblatt 90/32**

(84) Benannte Vertragsstaaten:
**DE FR GB**

(56) Entgegenhaltungen:
**EP-A-0 179 278**
**DE-A-3 423 711**
**GB-A-2 153 538**
**US-A-4 483 179**
**US-A-4 570 097**

(73) Patentinhaber: **ROBERT BOSCH GMBH**
**Postfach 50**
**D-7000 Stuttgart 1 (DE)**

(72) Erfinder: **BAUER, Hans-Peter**
**Gebersheimer Weg 28**
**D-7257 Ditzingen-Heimerdingen (DE)**
Erfinder: **WESSEL, Wolf**
**Mühlstr. 27**
**D-7141 Oberriexingen (DE)**

EP 0 290 470 B1

Courier Press, Leamington Spa, England.

## Beschreibung

### Stand der Technik

Die Erfindung geht aus von einem bekannten Drucksensor. Bei einem derartigen Drucksensor ist das Meßelement in eine Sacklochbohrung des Gehäuses eingesetzt, insbesondere eingeschraubt. Dazu ist aber ein relativ großer Durchmesser der Sacklochbohrung erforderlich, wodurch die Festigkeit des Gehäuses verringert wird. Ferner muß das druckeinleitende Bauteil möglichst plan auf dem druckempfindlichen Element aufliegen, Bereits geringste Toleranzunterschiede und Winkelfehler können wegen der relativ geringen Schichtdicke des druckempfindlichen Elements zu Meßfehlern führen.

In der US—A—4 483 179 und in der US—A—4 570 097 sind Drucksensoren beschrieben, die als Meßelemente piezoelektrische Elemente verwenden. Für deren Wirkungsweise ist eine Membran aus relativ dünnem Material oder mit dünnen Biegezonen notwendig. Membrane sind meist im Bereich der Biegezonen sehr dünn ausgelegt und können dort deshalb leicht brechen. Ferner ist es bei Membranen üblich, zwischen der Membran und den Piezoelementen einen sogenannten Stempel zur Druckübertragung zu verwenden. Diese Stempel ist zum Beispiel notwendig, um die temperaturempfindlichen Piezoelemente von den im Bereich der Membran herrschenden hohen Temperaturen zu trennen.

In der nicht vorveröffentlichten EP—A—0 179 278 wird ein Schichtwiderstand, das heißt ein Dickschicht- oder Dünnschichtwiderstand verwendet, der gegen den Boden einer Sacklochbohrung gedrückt wird. Eine biegbare Membran ist nicht notwendig. Bereits durch den herrschenden Druck hervorgerufene Stauchungen des Bodens genügen, um im Schichtwiderstand eine elektrische Meßspannung zu erzeugen. Da aber der Schichtwiderstand möglichst parallel zum Boden angeordnet sein soll, können durch Verkanten oder durch schräg auftreffende Drücke geringe Meßfehler entstehen.

Der Erfindung liegt die Aufgabe zugrunde, einen Drucksensor zu schaffen, der sich das Prinzip eines bekannten Drucksensors zunutze macht und eine gleichförmige und weitgehende fehlerfreie Übertragung des Drucks auf die Schichtwiderstände ermöglicht.

Diese Aufgabe wird durch die im Anspruch 1 aufgeführten Merkmale gelöst.

### Vorteile der Erfindung

Der erfindungsgemäße Drucksensor mit den Merkmalen des Hauptanspruchs hat demgegenüber den Vorteil, daß eine sehr genaue Druckeinleitung bzw. Druckübertragung auf das druckempfindliche Element möglich ist. Trotz der sehr geringen Baugröße kann dabei mit relativ großen Toleranzen gearbeitet werden. Ferner ist kein Gewinde zum Einbau des Meßelements notwendig. Dadurch kann der Durchmesser der Sacklochbohrung relativ gering ausgebildet sein, so daß die mechanische Festigkeit des Gehäuses verbessert wird. Der mechanische Befestigung des Meßelements im Gebergehäuse ist in einfacher Weise durch z.B. eine Schweißverbindung gewährleistet. Da im Bereich des druckempfindlichen Elements und der Membran am Sensorgehäuse kein Außengewinde ausgebildet ist, ist es in diesem Bereich frei von mechanischen Schwingungen oder Verspannungen, die durch den Einbau des Sensorgehäuses hervorgerufen werden können. Die von der Membran übertragenen Druckwerte sind somit nicht durch mechanische Schwingungen verfälscht. Der druckempfindliche Bereich des Drucksensors ist dadurch weitgehend von der Verspannung des Gebergehäuses beim Einschrauben in die Wandung entkoppelt. Außerdem können in einfacher Weise Leiterbahnen auf das Meßelement aufgedruckt werden und die jeweiligen Meßsignale abgeleitet werden. Es ist eine Kontaktierung der Widerstandsschicht außerhalb des mit Druck beaufschlagten Bereichs des Drucksensors möglich. Die Leiterbahnen und die Widerstandsschicht können sich überlappen. Da keine Züleitungsdrähte im kritischen Geberbereich bzw. keine Maßnahmen zur Isolierung notwendig sind, ergibt sich eine einfache elektrische Zuleitung zur Widerstandsschicht.

Durch die in den abhängigen patent ansprüchen aufgeführten Maßnahmen sind vorteilhafte Weiterbildungen des im unabhängigen Anspruch angegebenen Drucksensors möglich.

### Zeichnung

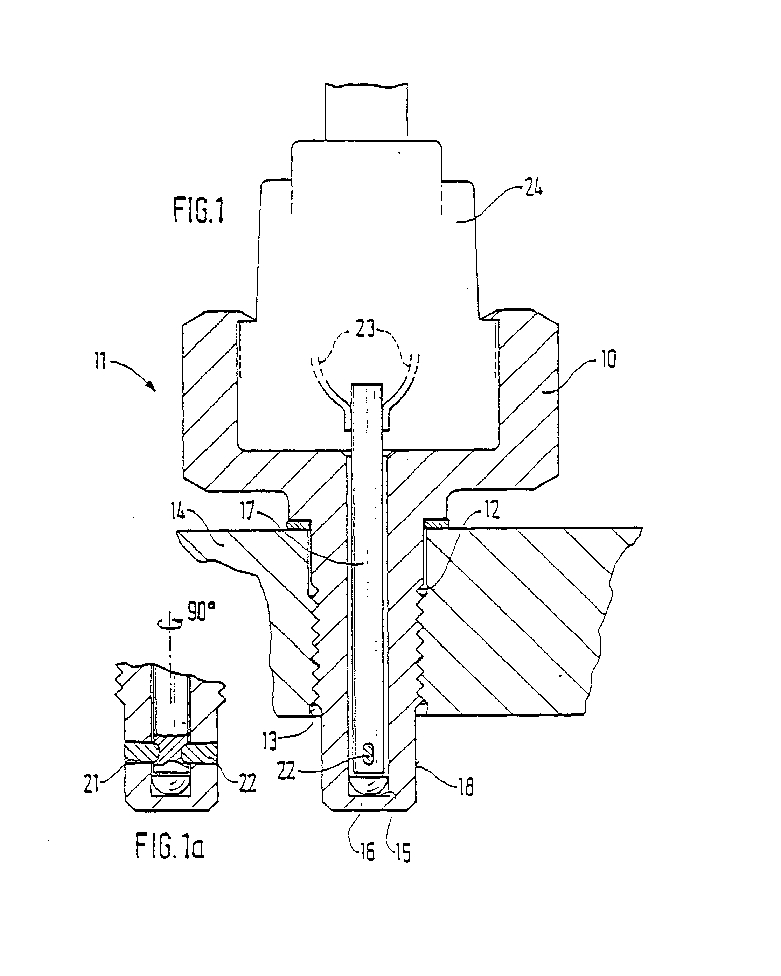

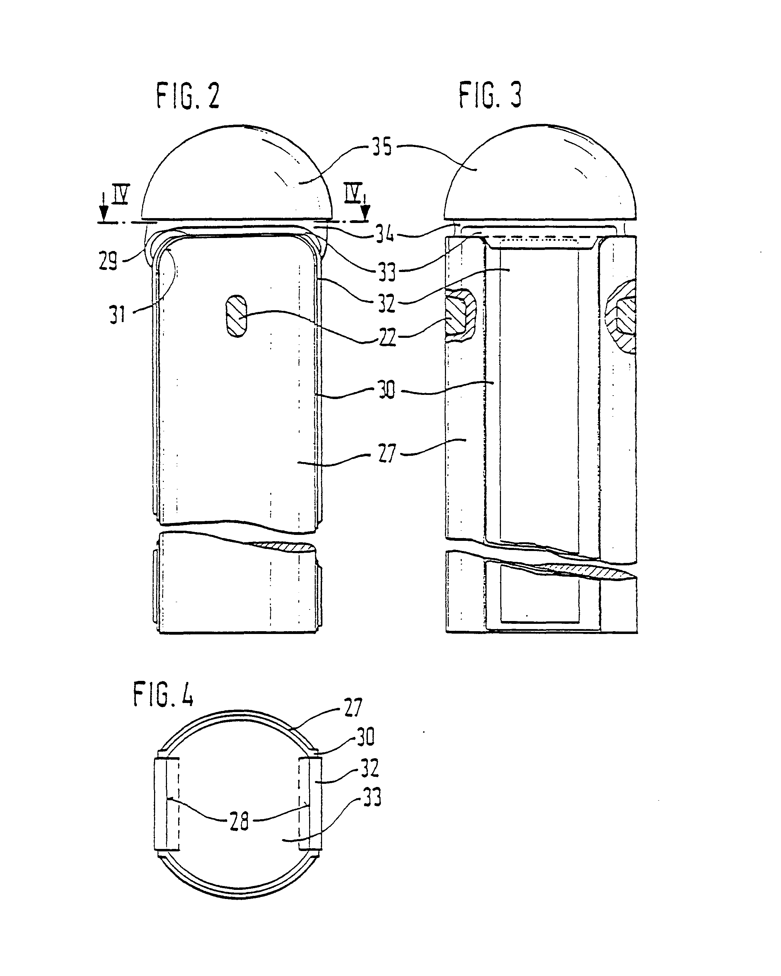

Ein Ausführungsbeispiel der Erfindung ist in der Zeichnung dargestellt und in der nachfolgenden Beschreibung näher erläutert. Es zeigen Figure 1 einen Längsschnitt durch einen Drucksensor, Figur 1a ein Detail, Figur 2 einen Längsschnitt durch das Meßelement des Drucksensors, Figur 3 einen Längsschnitt durch das um 90° gegenüber der Figur 2 gedreht Meßelement und Figur 4 einen Schnitt durch Figur 2 in Richtung IV—IV.

### Beschreibung des Ausführungsbeispiels

In Figur 1 ist mit 10 das Gehäuse eines Drucksensors 11 bezeichnet, das als Schraube oder in Schraubenform ausgebildet ist. Das Gehäuse 10 ist mit Hilfe eines Außengewindes 12 in eine Bohrung 13 der Wandung 14 eines Druckbehälters eingesetzt und ragt über die Wandung 14 hinaus in das Medium hinein, dessen Druck bzw. Druckvariation gemessen werden soll. Dabei kann das Gehäuse 10 auch bündig mit der Wandung 14 des Druckbehälters abschließen. Es ist aber ebenso denkbar, daß das Gehäuse 10 nicht über die Bohrung 13 hinausreicht und somit zurückgesetzt und geschützt in der Bohrung 13 angeordnet ist. Das Gehäuse weist eine etwa mittige Sacklochbohrung 15 auf, deren Boden als Druckmembran 16 ausgebildet ist. In die Sacklochbohrung 15 ist das Meßelement 17 des Drucksensors 11 eingesetzt, das an der Druckmembran 16 anliegt. Das Außengewinde 12 des Gehäuses 10 reicht nicht bis an das dem Druckmedium zugewandte Ende des Gehäuses 10, so daß die Druckmembran 16 frei von mechanischen Spannungen und Schwingungen ist. Im Bereich dieses gewindefreien Abschnitts 18 ist das Gehäuse 10 mit dem Meßelement 17 mit Hilfe einer Laser- oder Elektronenstrahlschweißung 22 verbunden. Das Meßelement 17 ist dadurch an der Druckmembran 16 anliegend befestigt. Die Festigkeit des Gehäuses 10 wird durch die Schweißung 22 nicht verringert. Es ist aber auch denkbar, im Abschnitt 18 eine durchgehende Querbohrung 21 auszubilden. Mit Hilfe einer Schweiß- oder Lötverbindung ist eine mechanische Verbindung zwischen Gehäuse 10 und Meßelement 17 hergestellt. Statt einer Schweißverbindung kann auch eine andere mechanische Verbindung, z.B. mittels Schrauben, verwendet werden. Um die Festigkeit das Gehäuses 10 nicht zu verringern, sool die Querbohrung mit sehr kleinem Durchmesser ausgebildet sein. Die Schweißung 22 dient sowohl um Befestigen des Meßelements 17 in der Sacklochbohrung 15 als auch zur Erzeugung einer Gegenkraft bzw. Vorspannung für die Druckmembran 16. Vom Meßelement 17 führen elektrische Leitungen 23 zu einem nicht näher dargestellten elektrischen Anschlußteil 24 bzw. einer nicht dargestellten Auswerteschaltung.

Das Meßelement 17 weist—wie in den übrigen Figuren näher dargestellt—einen zylinderförmigen Edelstahlkörper 27 auf, der an der Längsseite zwei diametral gegenüberliegende Abflachungen 28 hat. Auf die Abflachungen 28 und auf die Stirnfläche 29 des Edelstahlkörpers 27 ist eine Isolierschicht 20 aus Emaille-Werkstoff aufgebracht. Der Edelstahlkörper 27 hat abgerundete Kanten 31, wodurch eine gute Haftung der Isolierschicht 30 erreicht wird. Auf die Isolierschicht 30 sind an den Abflachungen 28 und etwas über die Kanten 31 elektrische Leiterbahnen 32, z.B. aus Silber-Palladium, in herkömmlich bekannter Weise in Dickschichttechnik aufgedruckt. Es kann aber auch die Dünnschichttechnik verwendet werden. Auf die Stirnfläche 29 des Edelstahlkörpers 27 ist auf die Isolierschicht 30 ein druckempfindlicher Widerstand 33 aufgebracht. Im Bereich der Kanten 31 überlappen sich der Widerstand 33 und die Leiterbahnen 32. Der Widerstand 33 kann auf der Basis des bekannten piezoresistiven Effektes arbeiten und soll insbesondere in Dickschichttechnik aufgedruckt werden. Auf dem Widerstand 33 befindet sich eine Abdeckschicht 34, die bis über die Überlappungsstelle zwischen dem Widerstand 33 und den Leiterbahnen 32 reicht. Die Abdeckschicht 34 dient sowohl als Schutz für den Widerstand 33 als auch gleichzeitig als Klebeverbindung für eine auf die Stirnfläche 29 des Edelstahlkörpers 27 aufgesetzten Haube 35. Diese ist aus einem harten Werkstoff vorzugsweise gehärtetem Stahl oder Keramik hergestellt. Die Haube 35 kann als Halbkugel oder mit einer gekrümmten Oberfläche ausgebildet sein. Wichtig ist dabei eine punktförmige Auflage der Haube 35 auf der Druckmembran 16. Die Schweißverbindungen 22 sind nach dem Widerstand 33 am Edelstahlkörper 27 angeordnet.

Die Wirkungsweise des Drucksensors 11 ist hinlänglich bekannt und deshalb hier nur kurz erläutert. Die vom Druck des Druckmediums in der Druckmembran 16 erzeugte Durchbiegung wird durch die Haube 35 gleichförmige auf den Widerstand 33 übertragen., Da die Haube 35 nahezu punktförmig auf der Druckmembran 16 anliegt, braucht diese selbst nicht exakt plan und parallel zum Widerstand 33 ausgebildet zu sein. Der Membran hub des Bereiches maximaler Durchbiegung der Druckmembran 16 wird durch die Planseite der Haube gleichförmig und weitgehend fehler frei auf die Widerstandsschicht 33 übertragen. Durch die punktförmige Auflage der Haube 35 können Unlinearitäten des Meßwertes infolge unsymmetrischer Pressung des Widerstandes 33 verhindert werden. Da die Planfläche (die der Widerstandsschicht zugewandte Seite) der Haube mit wesentlich geringerer Rauhigkeit ausgeführt werden kann als die Membraninnenfläche, wird vermieden, daß Unebenheiten zu punktförmigen Belastungen des Widerstandes 33 und somit zu einer nichtlinearen Charakteristik führen. Statt einer Halbkugel kann die Haube 35 auch eine gekrümmte Oberfläche haben. Je geringer die Masse der Haube 35 ist, desto besser ist die Dynamik des Drucksensors 11.

Es wäre auch denkbar, den Boden der Sacklochbohung gekrümmt auszubilden. Der Radius des Bodens und der Haube müssen aber verschieden sein, um ein Verklemmen zu verhindern.

Solche Drucksensoren lassen sich mit Vorzug bei der Druckmessung in Verteilerpumpen von Kraftstoffeinspritzsystemen sowie bei der Verbrennungsdruckmessung in Diesel- oder Ottomotoren einsetzen. Insbesondere ist eine Anwendung für hohe Drücke und für Serienprodukte möglich. Der Drucksensor kann in kostengünstigen und für die Massenproduktion geeigneten Arbeitsschritten hergestellt werden.

**Patentansprüche**

1. Drucksensor (11), insbesondere zur Erfassung des Drucks eines von einer Wandung (14) begrenzten Mediums mit einem Schichtwiderstand (33) in Gestalt eines Dickschicht- oder Dünnschichtwiderstands, welcher unter Druckeinwirkung seine elektrischen Eigenschaften ändert, ferner mit einem Gehäuse (10), der den Schichtwiderstand (33) und dessen elektrische Zuleitungen (23) lagert und einen gegenüber dem Medium, dessen Druck bestimmt werden soll, abgeschlossenen Hohlraum (15) in Form eines Sacklochs bildet, in welchem der Schichtwiderstand (33) von innen mit Hilfe einer aus druckübertragendem Material bestehenden Haube (35) nahezu punktförmig am Hohlraumboden (16) anliegt.

2. Drucksensor nach Anspruch 1, dadurch gekennzeichnet, daß der Schichtwiderstand (33) an einem Meßelement (17) angeordnet ist, das mit Hilfe einer mechanischen Verbindung (22) fest mit dem Gehäuse (10) verbunden ist.

3. Drucksensor nach Anspruch 1 und/oder 2, dadurch gekennzeichnet, daß der Gehäuse (10) des Drucksensors (11) nur bis zum Bereich des Schichtwiderstands (33) ein Außengewinde (12) aufweist.

4. Drucksensor nach einem der Ansprüche 1 bis 3, dadurch gekennzeichnet, daß im Bereich zwischen dem Schichtwiderstand (33) und dem Außengewinde (12) im Gehäuse mindestens eine Querbohrung (21) ausgebildet ist, in der die mechanische Verbindung (22) angeordnet ist.

5. Drucksensor nach einem der Ansprüche 1 bis 4, dadurch gekennzeichnet, daß die mechanische Verbindung (22) eine mittels Laser- oder Elektronenstrahl hergestellte Schweißverbindung ist.

6. Drucksensor nach einem der Ansprüche 2 bis 5, dadurch gekennzeichnet, daß die Isolierschicht (30) und die Leiterbahnen (32) des Schichtwiderstands (33) in Dickschichttechnik auf das Meßelement (17) aufgedruckt sind und sich die Leiterbahnen (22) und der Schichtwiderstand (33) überlappen.

7. Drucksensor nach einem der Ansprüche 1 bis 6, dadurch gekennzeichnet, daß die Haube (35) ein gekrümmte Oberfläche hat.

8. Drucksensor nach einem der Ansprüche 1 bis 6, dadurch gekennzeichnet, daß die Haube (35) eine Halbkugel ist.

**Revendications**

1. Capteur de pression (11), en particulier pour l'enregistrement de la pression d'un milieu délimité par une paroi (14), avec une résistance en couche (33) sous forme d'une résistance à couche épaisse ou à couche mince, laquelle, sous l'action de la pression, modifie ses propriétés électriques, avec de plus un boîtier (10) qui supporte la résistance en couche (33) et ses lignes électriques (23), et un espace creux fermé (15) situé en face du milieu dont la pression doit être déterminée et ayant la forme d'un trou borgne, dans lequel repose de façon quasiponctuelle la résistance (33) en couche sur le fond (16) du volume creux, à l'aide d'un capot (35) constitué d'un matériau transmettant la pression.

2. Capteur de pression selon la revendication 1, caractérisé en ce que la résistance en couche (33) est placée sur un élément de mesure (17), qui est relié de façon fixe à l'aide d'une liaison mécanique (22) avec le boîtier (10).

3. Capteur de pression selon les revendications 1 ou 2, caractérisé en ce que le boîtier (10) du capteur de pression (11) présente un filetage extérieur (12) seulement jusqu'à la zone de la résistance en couche (33).

4. Capteur de pression selon l'une quelconque des revendications 1 à 3, caractérisé en ce que, dans la zone entre la résistance en couche (33) et le filetage extérieur (12), au moins un alésage transversal (21) est pratique dans le boîtier, la liaison mécanique (22) étant ajustée dans cet alésage.

5. Capteur de pression selon l'une quelconque des revendications 1 à 4, caractérisé en ce que la liaison mécanique (22) est une liaison par soudage réalisé par laser ou par bombardement électronique.

6. Capteur de pression selon l'une quelconque des revendications 2 à 5, caractérisé en ce que la couche isolante (30) et les lignes conductrices 632) de la résistance en couche (33) sont imprimées sur l'élément de mesure (17) avec la technique de couche épaisse, et en ce que les lignes conductrices (32) et la résistance en couche (33) se recouvrent.

7. Capteur de pression selon l'une quelconque des revendications 1 à 6, caractérisé en ce que le capot (35) a une surface supérieure bombée.

8. Capteur de pression selon l'une quelconque des revendications 1 à 6, caractérisé en ce que le capot (35) est une demi-sphère.

**Claims**

1. Pressure sensor (11), in particular for sensing the pressure of a medium bounded by a wall (14), comprising a film resistor (33) in the form of a thick-film or thin-film resistor which changes its electrical properties under the action of pressure, and furthermore a housing (10) which carries the film resistor (33) and its electrical feed lines (23) and forms a hollow space (15), closed off from the medium whose pressure is to be determined, in the form of a blind hole in which the film resistor (33) bears from the inside in a virtually point-like manner against the bottom (16) of the hollow space by means of a cap (35) made of pressure-transmitting material.

2. Pressure sensor according to Claim 1, characterized in that the film resistor (33) is arranged on a measuring element (17) which is firmly connected to the housing (10) by means of a mechanical connection (22).

3. Pressure sensor according to Claim 1 and/or 2, characterized in that the housing (10) of the pressure sensor (11) has an external thread (12) only as far as the area of the film resistor (33).

4. Pressure sensor according to any of Claims 1 to 3, characterized in that, in the area between the film resistor (33) and the external thread (12), at least one transverse bore (21) in which the mechanical connection (22) is arranged is formed in the housing.

5. Pressure sensor according to any of Claims 1 to 4, characterized in that the mechanical connection (22) is a welded joint produced by means of a laser or electron beam.

6. Pressure sensor according to any of Claims 2 to 5, characterized in that the insulating film (30) and the strip conductors (32) of the film resistor (33) are printed onto the measuring element (17) in thick-film technology, and the strip conductors (22) and the film resistor (33) overlap.

7. Pressure sensor according to any of Claims 1 to 6, characterized in that the cap (35) has a curved surface.

8. Pressure sensor according to any of Claims 1 to 6, characterized in that the cap (35) is a hemisphere.

EP 0 290 470 B1

FIG.1

FIG.1a

90°

# FIG. 2

# FIG. 3

# FIG. 4